# EUROPEAN PATENT APPLICATION

(11) **EP 3 293 982 A1**
(43) Date of publication of application: **14.03.2018**
(21) Application number: 16382416.2
(22) Date of filing: 07.09.2016
(51) Int. Cl.: H04N 21/858, G06F 17/20, G06Q 30/06, H04N 21/854, G06Q 30/02

(54) **COMPUTER IMPLEMENTED METHOD FOR GENERATING AT LEAST ONE VIDEO FROM AT LEAST ONE URL**

(71) Applicant: Nextchance Assets, S.L., 28046 Madrid (ES)
(72) Inventor: Tucholka, Andrzej, E-28046 Madrid (ES)
(74) Representative: ABG Patentes, S.L.

(57) **Abstract**

A computer implemented method for generating at least one video from at least one URL, comprising the following steps carried out by means of a computer system, receiving at least one URL, retrieving data from at least one server, choosing a template from a library according to at least one criterion, normalizing the at least one data item in a specific data format, adapting the at least one data item the data items to the template, matching the at least one data item with the template creating at least one rendering package, merging the at least one render package obtaining at least one merged template, rendering, in at least one rendering engine and employing at least one rendering strategy, the at least one merged template obtaining at least one video. The at least one video can be later delivered to the viewer using varying, industry-standard video distribution methods.

## Description

### TECHNICAL FIELD OF THE INVENTION

The present invention belongs to the field of the computed implemented inventions and, more particularly, to the field of converting data resources into videos.

### BACKGROUND OF THE INVENTION

In the area of highly paralleled rendering of videos, the standard tools enable distributed rendering of a single video that is being worked on.

Video editing tools are well known in the state of the art. A video editing tool creates a video from an input data received. The process for video editing is as follows: firstly, the video editing tool receives the data required for the rendering, for example images, sounds, text and/or videos. Then, an operator edits the data and configures the video editing tool, i.e., how the input data will be transformed into the video. Finally, the video editing tool renders a final video based on the defined configuration.

When this process is scaled to large video (i.e. movie) editing and production, the video rendering capacity required for it often exceeds the capacity of a unitary computer. To address this issue, the industry has created a software solution (render farm manager) to be able to manage multiple machines rendering parts of the video. The problem of the render farms is that they require manual operator, controlling the video editing and production processes.

Therefore, when the amount of the parameters to be selected (images, text, faces, figures, objects) is very high or in the case of a large video or multiple video productions, the duration of the video production process is exponentially increased. Furthermore, the said very high amount of parameters could lead to errors in the process of the configuration of the video editing tool, increasing, even more, the duration of the video production process and the costs of said video production process.

Another problem found in the video editing tools is their specialization. That means that the video editing tools is not optimal to process other types of data such as, text, or sound. Therefore, during the video production process if the operator needs to do some editing, he must use another editing tool. Then the operator must manually use different tools with different formats, which sometimes are incompatible to each other. These problems increase the cost, the complexity and the duration of the video production process.

Additionally, some tools only accept a specific data format and if the data cannot be transformed, the video cannot be produced.

There is an emerging need in the Internet industry, for producing a massive amount of short, quickly updated videos, to reduce the duration and cost of the video production process and to increase the efficiency of the video editing tools working in highly scalable and dynamic environments.

### SUMMARY OF THE INVENTION

The present invention provides an alternative solution for the aforementioned problems, by a computer implemented method for transforming at least one URL into at least one video according to claim 1, a data processing system according to claim 13, a computer program according to claim 14 and a computer-readable storage medium according to claim 15. In dependent claims, preferred embodiments of the invention are defined.

In a first inventive aspect, the invention provides a computer implemented method for generating at least one video from at least one URL (Universal Resource Locator), comprising the following steps carried out by means of a computer system comprising at least one processing module,
a) receiving at least one URL by the at least one processing module,
b) retrieving, by the at least one processing module, at least one data item from at least one server, being the at least one server referenced by the at least one URL, wherein the at least one data item comprises at least one data field,
c) choosing, by the at least one processing module, at least one template from a library of templates according to at least one criterion, wherein each of the at least one template comprises metadata which defines at least one requirement of the template, and at least one characteristic of the data items that are to be included in the template,
d) normalizing, by the at least one processing module, the at least one data item to a specific data format according to the at least one requirement of the template, obtaining at least one normalized data item,
e) adapting, by the at least one processing module, the at least one normalized data items of the step d) to the at least one requirement of the template, obtaining at least one adapted data item,
f) matching, by the at least one processing module, the at least one adapted data item of the step e) with the template creating at least one render package, and
g) merging, by the at least one processing module, the at least one adapted data item of the render package with the template, obtaining at least one merged template,
h) rendering the at least one merged template, in at least one rendering engine and employing at least one rendering strategy, obtaining at least one video by the at least one processing module.

The computer implemented method uses at least one processing module. The at least one processing module is configured to connect to the at least one server which is indicated in the received URL. The processing module may be a device such as, a server, personal computer, tablet or mobile phone, or a thread process in a processor wherein the method can be executed. In a preferred embodiment, each step of the method is performed in different processing modules.

In the step b) of retrieving, the method downloads at least one data item which is referenced by the at least one URL. A data item comprises at least one data field which comprises a HTML, an image, a video, a text or a sounds, etc. Advantageously, the method avoids the need of manually managing the data to the generating video process enhancing the speed of the method and reducing the cost of the video production.

The library of templates comprises at least one template. In the context of this invention, a template comprises:
- One metadata describing the content and requirements of the template, for example, the required data fields of the data item.
- At least one configuration data for at least one rendering engine, wherein the at least one configuration data comprises at least one placeholder. The at least one placeholder defines a data field to be included in a placeholder, for example, the placeholder may define if it may store a HTML, an image, a video, a text or a sounds, etc.

The metadata defines the characteristics of the data fields that can be include in the template, for example, the number of data fields to be included in the template, i.e. in the placeholders, the type of data fields (text, video, image, sound, etc..) and the format of said data fields. The metadata may be data as such stored in the template, in the library of templates or in a file associated to the template.

The metadata additionally defines if at least one asset may be used in its related template. An asset may be an HTML, image, a video, a text, a sound or a configuration data for the at least one rendering engine. In one embodiment, the asset may be stored in a library of assets.

The set of configuration data also defines if the number of placeholders and/or if the position of the placeholders changes during the rendering of the template. The final video may contain frames with some placeholders and other frames without said placeholders. Additionally, some frames may be represented by the template with the placeholders set in a specific localization, and other frames may be represented by the same template but with the placeholders set in different localization. The number of frames of the video, if each frame corresponds with one template and the evolution of the placeholders in the template is defined by the set of configuration data.

Therefore, in the step c) of choosing at least one template, the method chooses the most suitable templates of the library of templates according to the characteristics described in the metadata and the data items received in step b) which are set in the at least one criterion. The method may choose more than one template and consequently the method will generate more than one video, i.e. one video per each chosen template.

The step d) of normalizing comprises unifying the format of the data items to a common data format. In one embodiment, the common data format is the admissible formats of the templates. Said admissible format are stated in the metadata of each template.

The step g) of merging comprises replacing in the placeholders of the template with adapted data comprised in the data fields of the adapted data items contained in the render package. The process of step g) obtains a merged template which is the element to be rendered by the at least one rendering engine.

The step h) of rendering comprises the step of performing a rendering of the at least one merged template using a rendering strategy. The rendering strategy defines a sequence of at least one render job to be rendered in the at least one rendering engine. The render job is a command for the at least one rendering engine, which states which merged data of merged template, i.e., the template instance with the merged data (placeholders and data fields) should be rendered. An example of render job may be:
- Rendering an adapted image/audio/text/video of a data field of an adapted data item merged in a placeholder of the template,
- Rendering an image/audio/text/video of an asset merged in a placeholder of the template, or
- Rendering a combination of both.

The present invention allows retrieving the data from the URL's without requiring manual identification of the data that should be used in the video, for example, data format. Additionally, the method allows processing any type of content avoiding the known problems of the video and sound editing tools. Advantageously, the above technical effects allows to the method of the invention to produce videos in large scale and multiple version of the same video at once, reducing the duration of the video production process optimizing resources and time. Additionally, the at least one video produced may be later delivered to the viewer using varying, industry-standard video distribution methods.

In one embodiment, the step b) of retrieving the at least one data item further comprises a scraping using keywords. The keywords scraping process is a search performed following the structure of the retrieved data, for example a HTML web page to locate key data items (for example price, description, etc.) using lexical analysis i.e., the keyword. The set of keywords used is chosen based on the internet domain where the data is retrieved from. Advantageously, this embodiment provides an interface in the at least one processing module enabling the identification of relevant data and reducing the time retrieving of the data which increases the efficiency of the method.

According to an embodiment, the metadata comprises a data field which defines a maximum number of data items in the at least one template, the at least one criterion being the maximum number of data items required by the at least one template, which is lower than or equal to the number of data items retrieved in step b) of the method. In other embodiment, the criterion is that the number of data fields required by the template is lower than or equal to the number of data fields of the data item retrieved in step b) of the method.

In one embodiment, when the at least one data field of the at least one normalized data item is an image, the step e) of adapting further comprises performing image processing to the image.

The step e) of adapting comprises modifying the content of the data field, for example, in the case of image processing this means that the image may be scaled or cropped. If the data field is a sound, a text or a video the inner properties to be adapted are different as it will be demonstrated further. This is due to the fact that the placeholder of the template comprises specific dimensions (in the case of the image), and therefore the image must be adapted. This is a different technical feature than the step d) of normalizing the data item as it is explained above.

According to an embodiment, when the at least one data field of the at least one normalized data item is a text, the step e) of adapting further comprises performing text processing to the text.

According to an embodiment, when the at least one data field of the at least one normalized data item is a video, the step e) of adapting further comprises performing video processing to the video.

According to an embodiment, when the at least one data field of the at least one normalized data item is a sound, the step e) of adapting further comprises performing audio processing to the sound.

In one embodiment, the step e) of adapting the normalized data items further comprises an additional step, checking whether the quality of the data of the at least one data field is higher than a threshold. For example, when the at least one data field is an image and the metadata defines a minimum resolution of the image to be included in the template, the threshold is the minimum resolution of an image to be included in the template.

In the embodiments related to the step e) of the method of the invention, the method modifies the content of the data field of the data items according to the properties of the template which are described in its metadata. Then, for example, the length of the text may be limited to certain characters, e.g., 300, or the contrast of an image may be increased or an image background may be deleted.

Advantageously, the above embodiments avoid any incompatibilities between the data retrieved and the selected template in step c), reducing the errors in the video production process. Therefore, the method of the invention allows producing video with data with different formats and without operator's intervention.

In one embodiment, the step e) of adapting further comprises an additionally step of retrieving, by the at least one processing module, at least one asset from a library of assets. In a more particular embodiment, the step e) of adapting further comprises adapting the at least one asset to the requirements of the template, obtaining at least one adapted asset. In another particular embodiment, the step f) of matching further comprises matching the at least one adapted asset and the at least one adapted data item of step e) with the template creating at least one render package. In another particular embodiment, the step g) of merging further comprises merging the at least one adapted asset, and the at least one adapted data item of the render package with the template. In this case, the step g) of merging comprises replace in the placeholders of the template with at least one asset and/or with at least one adapted data item.

In the case of the templates need more data than the data items normalized, the method can retrieve data from the library of assets. In this case, the assets of the library of assets are already normalized to a common storage format and therefore they are compatible with the template. Advantageously, these embodiments avoid the need of manually managing the assets to the generating video process enhancing the speed of the method and reducing the cost of the video production.

According to an embodiment, the step of f) matching the adapted data further comprises grouping adapted data items according to the metadata in the at least one rendering package. This embodiment allows grouping the related data items of different products in to a package satisfying the requirements of the selected template. The rendering package comprises at least one adapted data item and a reference to the selected template. For example, the reference to the selected template may be the name of the template or unique identifier in the library of templates.

In one embodiment, the at least one rendering strategy comprises defining a sequence of rendering of the at least one render job to be rendered in the at least one rendering engine.

In one embodiment, the rendering strategy is rendering the at least one data render job in one rendering engine. Advantageously, this rendering strategy increases the speed of rendering in the amount of videos to be rendered is high, for example, one thousand.

According to an embodiment, the rendering strategy is a structured strategy. In the structured strategy, the sequence of the at least one render jobs comprises
- First render job: rendering, by at least one rendering engine, the placeholder of the at least one merged template which comprises sound and/or video obtaining at least one rendered item.
- Second renderjob: merging, by the at least one processing module, the at least one rendered item with the at least one merged template, obtaining at least one rendered template.
- Third render job: rendering, by at least one rendering engine, the at least one rendered template obtaining at least one video.

In this strategy it may be added additional audio visual effects or assets during the first rendering, which advantageously increases quality of the videos obtained.

In one embodiment, when the step h) of rendering is performed in a plurality of rendering engines, the rendering strategy may be a concurrent strategy. In the concurrent strategy, the sequence of at least one render jobs comprises
- First render job: distributing the at least one merged template between the plurality of rendering engines,
- Second render job: rendering by each rendering engine the at least one merged template received, obtaining at least one video sequence.
- Third render job: merging the at least one video sequence obtaining at least one video.

Advantageously, this rendering strategy increases the speed of rendering if the amount of videos to be rendered is low, for example, between 1 and 10.

In one embodiment, the method further comprises an additional step in the step h):
- fetching at least one rendering engine with at least one asset for the at least one render job.

In this embodiment, the processing module is configured to fetch the at least one rendering engine during the step h) of the method of the invention. In this case, the assets are used to enrich the video content. Advantageously, the method avoids the need of manually managing the data in order to personalizing the video process, which enhances the speed of the method and reducing the cost of the video production.

These embodiments define how the render jobs are processed. The processing in a rendering engine is asynchronous, i.e., the rendering is performed in each rendering engine in a manner enabling scalability of such rendering. Scalability here is enabled by the fact that there is a varying number of rendering strategies for the same rendering engine, which means that render jobs may be processed concurrently with high efficiency both at low and high scale. Therefore, theses embodiments generate an effective rendering process, because of the flexibility achieved with rendering strategies and concurrent nature of the method, and additionally there are not direct dependencies on other rendering engines which consumes other rendering engines resources or which makes the rendering process sequential.

Advantageously, the above embodiments increase the efficiency of the rendering process reducing the duration of the video production process, especially if the method processes multiple render jobs in the same time.

According to an embodiment, the method further comprises storing the video in a video distribution module.

In a second inventive aspect, the invention provides a data-processing system for generating at least one video from at least one URL comprising
- a processing module comprising,
   o a data scraping module,
   o a data processing module with a data normalization module and a data enrichment module,
   o a video rendering module,
   o a video distribution module,
wherein the at least one processing module is configured for carrying out the steps of the first inventive aspect.

In a third inventive aspect, the invention provides a computer program comprising computer program code, which, when executed by a computer, causes the computer to carry out all the method steps of the first inventive aspect.

In a fourth inventive aspect, the invention provides a computer-readable storage medium having stored thereon a computer program according to the third inventive aspect.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a block diagram of the components of the processing module configured to for carrying out the steps of the method of the invention.
- Figure 2: This figure shows a block diagram of the method of the invention.
- Figure 3: This figure shows an example of the library of templates used in the method of the invention.

### DETAILED DESCRIPTION OF THE INVENTION

Unless defined otherwise, all technical terms used herein have the same meaning as commonly understood to one of ordinary skill in the art to which this disclosure belongs.

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including functional programming language such as Scala, Erlang, Haskell or the like, including an object oriented programming language such as Java, Smalltalk, C++ or the like, including compiled or interpreted languages such as Javascript, PHP, Python or the like, and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to illustrations and/or diagrams of methods, apparatus (systems) and computer program products according to embodiments of the invention. It will be understood that each illustration can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

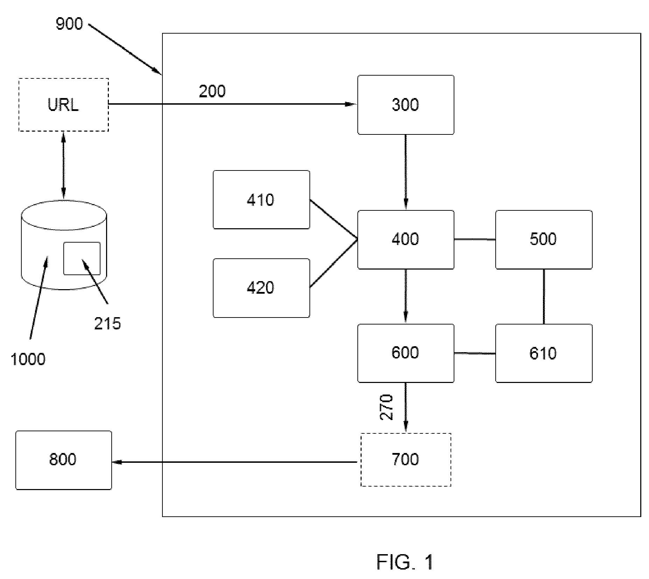

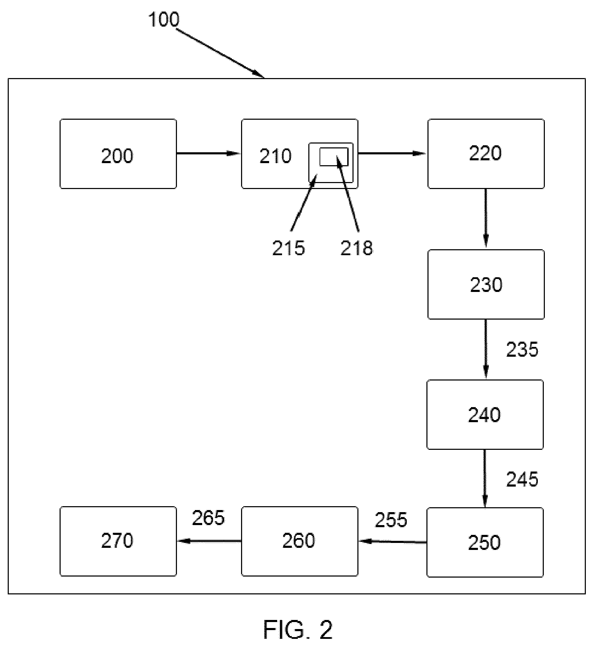

Once the object of the invention has been outlined, specific non-limitative embodiments are described hereinafter. The present invention is a method for transforming at least one URL into at least one video. Figures 1 and 2 specify a particular embodiment of the method of the invention (100).

The specific embodiment of the invention is disclosed wherein said specific embodiment implements several improvements of the method according to the invention in order to understand several particularities and possibilities that provides a further reduction of the computational cost.

The embodiment described in figure 2 is a method (100) for transforming a URL into a video (800) which is executed in at least one processing module (900). In this example, there is one processing module (900) and it is located in a remote server. At it is shown in figure 1, the processing module (900) comprises:
- A data scraping module (300).
- A data processing module (400).
- A video rendering module (600).
- A video distribution module (700).

### Retrieving (210) the data items (215)

In the step a) of the method (100), at least one URL is received (200) as input data. The method (100) may receive (200) the at least one URL from many sources, for example, a client server, a mobile phone, a tablet, a PC, etc. In this example, the method (100) receives (200) the at least one URL, from a tablet. The URLs enable the method (100) to locate the data to be processed. In this example, the URLs received from the tablet are www.shoes.com/product1 and www.shoes.com/product2, which represent two different pair of shoes. Thus, the processing module (900), in particular the scraping module (300), receives said URL's.

Once the URL's were received (200), the method (100) of the invention retrieves (210) at least one data item (215) from the at least one URL. The data scraping module (300) is configured to retrieve (210) at least one data item (215) from the URLs, performing the step b) of the method (100) the invention. In this example, the data scraping module (300) retrieves two data items (215) for each URL.

In other examples, the process of retrieving (210) data further comprises a scraping approach using keywords, i.e., a structured search for keywords are performed. An example of keywords may be "price", "title" or "header". The keywords are associated to the type of source format of the data retrieved from the URL. An example of source format may be HTML, XML, JSON, etc.

For example, if the data item (215) obtained is an HTML file, the keyword associated is "title" therefore the method (100) retrieves the data as a data item (215) with a text field with the name of the product. As the structure and the elements of said source formats are known, the scraping module (300) is configured to detect and understand the proper storage format of the data on said source format. Due to this property, the step b) further comprises generating at least one data field (218) in the data item (215) according to the keyword defined. Additionally, the data scraping module (300) may perform at least one additional scraping process adapted to the specific source or scope of the data. In the HTML example, once the data scraping module (300) has detected the keyword "body", the data scraping module (300) retrieves as an image field each element which comprises the keyword "img".

The first data item (215) retrieved from the URL www.shoes.com/product1 comprises:
- A first text field which comprises the trademark of the product. In this example, the value of the first text field is "best shoes" and the format of the text is ISO.
- A second text field which comprises the price of the shoe. In this example, the value of the second text field is "50€" and the format of the text is ISO.
- Two images of the shoe: "shoe1_image1", "shoe1_image2". In this example, the format of both images is "jpg".

In the same way, the second data item (215) retrieved from the URL www.shoes.com/product2, comprises:
- A first text field which comprises the trademark of the product. In this example, the value of the first text field is "luxury shoes" and the format of the text is ISO.
- A second text field which comprises the price of the shoe. In this example, the value of the second text field is "150E" and the format of the text is ISO.
- Two images of the shoe: "shoe2_image1.jpg", "shoe2_image2.jpg". In this example, the format of both images is "jpg".

In this example, the images of the data item (215) are referenced to the following URL's:
- www.shoes.com/product1/shoe1_image1.jpg.
- www.shoes.com/product1/shoe1_image2.jpg.

Therefore, the method (100) retrieves the two images as follows. Firstly, the method (100) connects to the server (1000) identified in said URL's, and secondly, the method (100) downloads the images to the web server (1000).

Therefore, at the end of the retrieving process each data item (215) comprises at least one data field (218) which defines the characteristics of the product, for example a text field for storing the characters, an image field for storing an image, a sound field for storing sounds. Additionally, the data fields (218) comprise a name tag and the content as such of the data field (218). In this example the name tags are first data field (218), second data field (218), third data field (218) and fourth data field (218).

In this example, the first data item (215) comprises the following data fields (218):
- A first data field (218) (text field): "best shoes"
- A second data field (218) (text field): "50€"
- A third data field (218) (image field): "C:/shoe1_image1.jpg"
- A fourth data field (218) (image field): "C:/shoe1_image2.jpg".

The second data item (215) comprises the following data fields (218):
- A first data field (218) (text field): "luxury shoes"
- A second data field (218) (text field): "150£"
- A third data field (218) (image field): "C:/shoe2_image1.jpg"
- A fourth data field (218) (image field): "C:/shoe2_image2.jpg"

In this example, the image fields store an instance of the data. Each instance states the place where the image is stored on the remote server.

Once the data items (215) have been retrieved, the scraping module (300) sends to the processing module (400) said data items (215).

### Processing data items (215): choosing (220) a template, normalizing (230) data items (215), adapting (240) normalized data items (235) and assets, matching (250) adapted data items (245) and assets with templates, merging (260) render package (255).

The data processing module (400) is configured to perform the steps c) to g) of the method (100) of the invention. After receiving the data items (215) from the scraping module (300), the data processing module (400) chooses (220) the most suitable template performing the step c) of the method (100) of the invention.

### Choosing (220) a template

In this example, the remote server comprises a library (500) of templates and a library of assets. In other examples, the processing module (900) is configured to connect to an external server or device and retrieve the library (500) of templates and/or the library of assets.

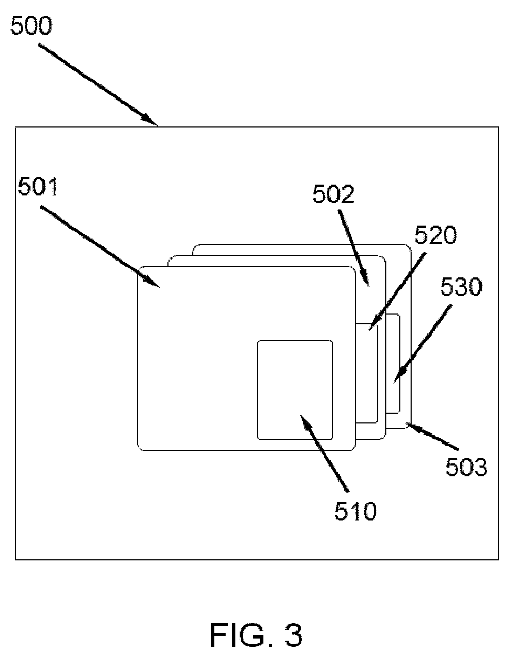

In this example and as it is shown in figure 3, the library (500) of templates comprises three templates (501, 502, 503). Each template (501, 502, 503) comprises the following elements:
- A configuration data for at least one rendering engine, wherein the at least one configuration data comprises at least one placeholder.
- A metadata (510, 520, 530).

As it is explained before, the placeholders are configured to store the value of the data field (218) and/or an asset. The type of data field (218) to be stored in each placeholder is defined by the metadata (510, 520, 530).

The metadata (510, 520, 530) defines the characteristics of the data fields (218) that can be included in the template (501, 502, 503) through the placeholders. Thus, the first metadata (510), which corresponds to the first template (501) of the library (500), defines that the first template (501) comprises two placeholders and each placeholder may include a data field (218) which comprise text field. In this example, the format of the text field is UTF-8.

The second metadata (520), which corresponds to the second template (502) of the library (500), defines that the second template (502) comprises five placeholders. In this example, each placeholder may include:
- First and second placeholder: each placeholder may include a data field (218) which each one comprises a text field.
- Third and fourth placeholder: each placeholder may include a data field (218) which each one comprises an image field. The resolution of each image field is 800 x 600 pixels.
- Fifth placeholder: the fifth placeholder may include a data field (218) which comprises a sound field.

The format of the text is UTF-8, the format of the images is PNG and the format of the sound is mp3.

The third metadata (530), which corresponds to the third template (503) of the library (500), defines that the third template (503) comprises fourteen placeholders. In this case, the placeholder may include:
- From first to third placeholder: each placeholder may include a data field (218) which each one comprises a text field.
- Fourth placeholder: the fourth placeholder may include a data field (218) which comprise sound field.
- From fifth to fourteenth placeholder: each placeholder may include a data field (218) which comprises image field.

The format of the text is UTF-8, the format of the sound is mp3 and the format of the images is JPEG.

The criterion for choosing a template depends on the availability, configuration, and quality of data items (215). In the case of the image field, it is relevant the resolutions of the images. In the case of the sound field, it is relevant the length of the sounds. In the case of the text field, it is relevant the language or the currency. Therefore, according to the properties of the data fields (218) and the metadata of the at least one template of the library (500), the data processing module (400) chooses the most adequate template, performing the step c) of the method (100) of the invention.

In this example, the criterion is that the template may only include two data fields (218) which comprise each one an image field. Therefore the template chosen by the method (100) is the second template (502).

### Normalizing (230) data items (215)

Once the template has been chosen, the method (100) normalizes (230) the data items (215) in a specific data format by the processing module (900), in particular by the data processing module (400). In this example, the data processing module (400) comprises an additional submodule: the data normalization module (410), performing the step d) of the method (100) of the invention.

In this example according to the second template (502), the normalization step comprises two steps:
a) Changing the format of the text field and the image field of each data item (215) to the format stated in the second metadata (520). For performing this step the method (100) analyses and interprets the content of each data field (218). In this example changing of the data format may be:
   - Text fields of the first and second data items (215): format adaptation to UTF-8, length cropping to 250 characters, English spellchecking.
   - Text fields of the first and second data items (215) Image field: ratio adaptation to 1:1, format change from jpg to png.
   An example changing of the data format in video and sound may be:
   - Video field: ratio adaptation to 1:1, format change from avi to h.264.
   - Sound field: format change to mp3.
b) Changing the name tag of the data fields (218) to a name which could be used in the template. These names are defined by a schema stored in the remote server and they help to the template to identify the content of the data field (218) to be used.

The schema defines the content of the data fields (218) providing a common metalanguage. For example, the schema may be stored in a text field which comprises the following strings separated by the symbol ";": "f1: text, title; f2: text, price, euros; f3: image, png; f4: image, png". If there are more data fields (218), they will be named subsequently f5, f6, etc. An example of schema may be:
- "f1: text, title". This means that the first data field (218) "f1" is a text field and describes the trademark of the shoe.
- "f2: text, price, euros". This means that the second data field (218) "f2" is a text field and describes the price and the currency.
- "f3: image, png; f4: image, png". This means that the third and fourth data fields (218) "f3" "f4" belong to an image field in a png format.

Thus, the name tags of the data fields (218) of the first data item (215) are changed as follows:
- Name tag of the first data field (218) of the first data item (215): "f1: text, title".
- Name tag of the second data field (218) of the first data item (215): "f2: text, price, euros".
- Name tag of the third data field (218) of the first data item (215): "f3: image, png".
- Name tag of the fourth data field (218) of the first data item (215): "f4: image, png".
- Name tag of the first data field (218) of the second data item (215): "f1: text, title".
- Name tag of the second data field (218) of the second data item (215): "f2: text, price, pounds".
- Name tag of the third data field (218) of the second data item (215): "f3: image, png".
- Name tag of the fourth data field (218) of the second data item (215): "f3: image, png".

Additionally, if necessary the normalization is performed in a concurrent manner (in case multiple data items (215) are provided).

### Adapting (240) normalized data items (235)

Once the data item (215) has been normalized obtaining normalized data items (235), the method (100) adapts (240) the normalized data items (235) in a specific data format by the processing module (900), in particular by the data processing module (400). In this example, the data processing module (400) comprises an additional submodule: the data enrichment module (420), performing the step e) of the method (100) of the invention.

The data enrichment module (420) adapts (240) the normalized data item (235) to the needs of the template. In this example adapting the normalized data item means that the enrichment module (420) is configured to:
- Performing image processing, for example, scaling and/or cropping the image, applying at least one visual filter to the image.
- Performing text processing, for example, correcting the spelling mistakes, modifying the length of the text, and/or modifying text layout for example capitalization of letters.
- Performing video processing, for example, changing the length of the video and/or removing the sound.
- Performing audio processing, for example, changing the length of the sound and/or normalizing the volume of the sound.

In this example, as the normalized data items (235) comprise two data fields (218) with normalized two images. The method (100) performs the following actions:
- Scaling and cropping each image contained in the normalized data field (218) to the dimensions used in the selected template. Said dimension are stated in the metadata of the template. In this example, the both images are scaled and cropped to a resolution of 800 x 600 pixels.
- Detecting spelling mistakes of both normalized text fields.

Additionally in the case of scaling an image, the enrichment module (420) checks in the metadata that the template requires a no-background image with 1:1 screen ratio. Then, the data enrichment module (420) eliminates the background part of the image of the data field (218) and crops the image to 1:1 screen ratio.

In the case of detecting spelling mistakes, the enrichment module (420) checks in the metadata that the template requires a text and the properties of said text, for example, the maximum length is 25 characters and the text should not have capital letters inside. Then, the data enrichment module (420) cuts the text to 25 characters and turns all letters to lowercase.

In this example, the selected template comprises a placeholder which may include a sound field, but the data items (215) obtained does not comprise any sound field. In this situation, the data processing module (400) is configured to asynchronously fetch the assets that a template need. In this example, the assets are stored in a library of assets inside the remote server and are used in a similar manner as the values of a data field of a data item (215). Therefore, values of the data fields of the data items (215) and assets may be an image, sound, video. In this example, the library of assets comprises the following plurality of assets:
- An asset which stores data field as image field: a background image with a resolution of 800 x 600 pixels. The format of this asset is stored in the least amount of common, lossless image formats compatible with the rendering engines.
- An asset which stores data field as video field: a video with a resolution of 800 x 600 pixels and duration of 60 seconds. The format of this asset is stored in the least amount of common, lossless video formats compatible with the rendering engines.
- An asset which stores data field as sound field: a sound with a resolution of 20 bits and duration of 60 seconds. The format of this asset is stored in the least amount of common, lossless sound formats compatible with the rendering engines.

As the assets are stored in all type of formats, the assets does not need to be normalized according to the requirements of the template. Therefore in this example, the data processing module (400) retrieves from the library of assets the asset which stores data field as sound field. Then, the method (100) adapts this asset to the needs of the template. In this case, the metadata states that the template needs a sound of 45 seconds. Therefore the data enrichment module (420) changes the length of said asset from 60 seconds to 45 seconds.

In this example, as a final step of the step e) of the method (100), the data enrichment module (420) verifies the quality of the data items normalized (235). This means that the data fields (218) should fulfil a specific criterion according to the characteristics of the template.

For a better understanding of the checking process, this paragraph explains another example different than the general example of this section of the description. In this example, the received URL was a link to a product, e.g., a pair of shoes. The scraping process retrieves 4 links or URL's, with the images of the product. Each of those links was stored in a separate data field (218). The images of those links are retrieved and are separately adapted to the needs of the template. Then the method (100) verifies the quality of the normalized data items (235) checking if they fulfil the quality of the template. In this example, the fourth image was not there because the link is not operated and the third image is too small to match the template requirements. As there are only two valid images, the requirements of the template are not fulfilled and therefore, this particular product is discarded by the checking process and it is not included into the next step of the method (100).

The step of checking the quality of the normalized data items (235) may be applied to the resolution of the image, contents (length) of the title, etc.

### Matching (250) adapted data items (245)

Once the normalized data items (235) have been adapted, the data processing module (400) matches (250) said adapted data items (245) and the adapted asset with the template (502) creating at least one render package (255), performing the step f) of the method (100) of the invention.

In this example, there is obtained two render packages (255). The first render package (255) comprises an instance to the second template (502), the first adapted data item (245) and the adapted asset. The second render package (255) comprises an instance to the second template (502), the second adapted data item (245) and the adapted asset. The step of matching further comprises a step which defines in which order the adapted data items (245) and the template (502) are going to be rendered in the step h) of the method (100).

### Merging (260) render package (255)

Once the data items have been adapted, the data processing module (400) merges (260) in each render package (255) the adapted data item (245) and the adapted asset with the template obtaining at least one merged template (265). In this example, the data processing module (400) perform the following steps:
- Merging the first adapted text in the first placeholder.
- Merging the second adapted text in the second placeholder.
- Merging the first adapted image in the third placeholder.
- Merging the second adapted image in the fourth placeholder.
- Merging the adapted asset in the fifth placeholder.

The result of this process is that a merged template for each rendering package. The merged template comprises the data ready to be rendered. Then the merged templates are sent by the data processing module (400) to the video rendering module (600).

### Rendering (270) the merged templates (265)

The merged templates (265) are received by the video rendering module (600), to perform the step g) of the method (100) of the invention. Said video rendering module (600) is configured to manage the rendering of the video, using rendering engines (610) for turning the template and the data items into a video.

The first step of the rendering process is choosing a rendering strategy. The rendering strategy sets the sequence of render jobs that have to be performed.

Depending on the strategy, the rendering process can include assets, for example, visual effects, sounds, backgrounds, etc. The rendering engines (610) are configured to retrieve the asset from the library of assets. Thus, said assets are fetched to the rending engines (610) in order to satisfy the requirements of the template. The requirements of the template may be:
- Implicit requirements: sound and video data items or assets, for example, fonts, or other small storage assets. If the implicit requirements are not present in the render job, the method (100) may fetch them in to the rendering process.
- Explicit requirements: if the method (100) is rendering 100 videos, each video background should be different. Such variation is defined in the metadata of each the template, providing names of such assets that should be fetched as they are required for the needs of the render during the rendering process.

In this example, the method (100) chooses performing a structured strategy and a concurrent strategy. For the first render package (255), the rendering strategy comprises the following render jobs:
- First render job: rendering in a rendering engine (610) the adapted asset merged in the fifth placeholder, obtaining a rendered item.
- Second render job: merging, by a rendering engine (610), the rendered item into the first merged template (265) obtaining a rendered template.
- Third render job: Distributing the remaining merged placeholders of the rendered template between the plurality of rendering engines (610). In this example, as there are four remaining merged placeholders, the method (100) distributes each merged placeholders to each rendering engine (610).
- Fourth render job: Rendering, by each rendering engine (610), the received merged placeholders, obtaining four video sequences.
- Merging, by a rendering engine (610), the four video sequences obtaining a video (700).

Regarding to the render jobs of the second render package (255), the rendering strategy performed is the similar. Therefore, it will be obtained two videos (700).

Once the rendering strategy has been defined, the video rendering module (600) will then manage the asynchronous rendering of the render package (255) following the chain of render jobs defined by the render strategy. In this example, the asynchronous rendering is performed by an external rendering engine (610). Said external rendering engine (610) may be integrated through a command line interface (CLI) or an application programming interface (API). The external rendering engine (610) is configured to process render jobs (resulting with videos, images, sound or other assets requiring processing) or the whole final video.

Once the asynchronous rendering has been performed, the video rendering module (600) stores both videos (700) in the video distribution module (800). Said video distribution module (800) is configured to adapt and deliver one of the two videos or both to the device on which it will be viewed.

In this example, the video distribution module (800) adapts the visualization of one video in a tablet, in particular, the video related to the first data item. Said distribution module (800), operating in a commonly known manner, will begin its operation by registering a new video source.

Depending on the implementation of the distribution module (800) (deciding if the content in varying codecs should be stored or generated ad'hoc) the system can adapt the audiovisual codecs to the format in which the content should be delivered. This step ensures the alignment of the format in which the content is encoded with the capabilities of the devices on which it is viewed.

As the last step of this process, the data-processing system delivers the video as the file or as a video stream. This choice depends on the device and player used for the playback of the video, used formats, codecs.

The videos provided by the distribution module (800) are mapping to the render packages (255), and depending on the number of those, the method (100) of the invention is configured to produce one or many videos (700) based on the data referenced by the at least one URL received.

## Claims

1. A computer implemented method (100) for generating at least one video (700) from at least one URL, comprising the following steps carried out by means of a computer system comprising at least one processing module (900),
a) receiving (200) at least one URL by the at least one processing module (900),
b) retrieving (210), by the at least one processing module (900), at least one data item (215) from at least one server (1000), being the at least one server (1000) referenced by the at least one URL, wherein the at least one data item (215) comprises at least one data field (218),
c) choosing (220), by the at least one processing module (900), at least one template (501, 502, 503) from a library of templates (500) according to at least one criterion, wherein each of the at least one template (501, 502, 503) comprises a metadata (510, 520, 530) which defines at least one requirement of the template (501, 502, 503) and at least one characteristic of the data items (215) that are to be included in the template (501, 502, 503),
d) normalizing (230), by the at least one processing module (900), the at least one data item (215) in a specific data format according to the at least one requirement of the template (501, 502, 503), obtaining at least one normalized data item (235),
e) adapting (240), by the at least one processing module (900), the at least one normalized data item (235) of the step d) to the at least one requirement of the template (501, 502, 503), obtaining at least one adapted data item (245),
f) matching (250), by the at least one processing module (900), the at least one adapted data item (245) of step e) with the template creating at least one render package (255),
g) merging (260), by the at least one processing module (900), the at least one adapted data item (245) of the render package (255) with the at least one template (501, 502, 503), obtaining at least one merged template (265), and
h) rendering (270) the at least one merged template (265), in at least one rendering engine (610) and employing at least one rendering strategy, obtaining at least one video (700) by the at least one processing module (900).

2. A method (100) according to claim 1, wherein the step b) of retrieving (210) the at least one data item (215) further comprises a scraping using keywords.

3. A method (100) according to any of the previous claims, wherein the metadata (510, 520, 530) comprises a data field which defines a maximum number of data items (215) in the at least one template (501, 502, 503), the at least one criterion being the maximum number of data items in the at least one template (501, 502, 503), which is lower or equal than the number of data items packaged in step c) of the method.

4. A method (100) according to any of the previous claims, wherein
when the at least one data field of the at least one normalized data item (235) is an image, the step e) of adapting further comprises performing image processing to the image, or
when the at least one data field of the at least one normalized data item (235) is a text, the step e) of adapting further comprises performing text processing to the text.

5. A method (100) according to any of the previous claims, wherein the step e) of adapting (240) the normalized data items (235) further comprises checking whether the quality of the data of the at least one data field is higher than a threshold.

6. A method (100) according to any of the previous claims, wherein the step e) of adapting (240) further comprises retrieving at least one asset from a library of assets, by the at least one processing module (900).

7. A method (100) according to claim 6, wherein the step e) of adapting (240) further comprises adapting the at least one asset to the requirements of the template (501, 502, 503), obtaining at least one adapted asset.

8. A method (100) according to claim 7, wherein the step f) of matching (250) further comprises matching the at least one adapted asset and the at least one adapted data item (245) of step e) with the template (501, 502, 203) creating at least one render package (255).

9. A method (100) according to claim 8, wherein the step g) of merging (260) further comprises merging the at least one adapted asset, and the at least one adapted data item (245) of the render package (255) with the template (501, 502, 203).

10. A method (100) according to any of the previous claims, wherein the at least one rendering strategy comprises defining a sequence of at least one render job to be rendered in the at least one rendering engine (610).

11. A method (100) according to claim 10, wherein the step h) of rendering (270) further comprises fetching at least one rendering engine (610) with at least one asset for the at least one render job.

12. The method (100) according to any of the previous claims wherein the method further comprises storing the video (700) in a video distribution module (800).

13. A data-processing system for generating at least one video (700) from at least one URL comprising
- a processing module (900) comprising,
o a data scraping module (300),
o a data processing module (400) with a data normalization module (410) and a data enrichment module (420),
o a video rendering module (600),
o a video distribution module (800),
wherein the at least one processing module (900) is configured for carrying out the steps of any of the methods of claims 1 to 12.

14. Computer program comprising computer program code, which, when executed by a computer, causes the computer to carry out all the method steps of any of claims 1 to 12.

15. Computer-readable storage medium having stored thereon a computer program according to claim 14.
